(19) Europäisches Patentamt / European Patent Office / Office européen des brevets

(11) **EP 4 325 630 A2**

(12) **EUROPEAN PATENT APPLICATION**

(43) Date of publication:
**21.02.2024 Bulletin 2024/08**

(21) Application number: **23188758.9**

(22) Date of filing: **31.07.2023**

(51) International Patent Classification (IPC):
**H01M 10/48** (2006.01)     **H01M 10/42** (2006.01)

(52) Cooperative Patent Classification (CPC):
**H01M 10/486; H01M 10/48;** H01M 10/4228;
H01M 10/425; H01M 2200/10; H01M 2200/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 IN 202211047327**

(71) Applicant: Honeywell International Inc.
**Charlotte, NC 28202 (US)**

(72) Inventors:
• **JAYAKUMAR, Prince Ashwin Kumar Anburaj**
  **Charlotte, 28202 (US)**
• **KUMAR, Nirmal A.**
  **Charlotte, 28202 (US)**

(74) Representative: **Haseltine Lake Kempner LLP**
**Cheapside House**
**138 Cheapside**
**London EC2V 6BJ (GB)**

(54) **APPARATUSES, METHODS, AND SYSTEMS FOR DETECTING BATTERY MODULE LEAKAGE**

(57)     Example apparatuses, methods, and systems for detecting battery module leakage are provided. An example battery module leakage detection device includes a pressure and temperature sensor and a controller. In some examples, the pressure and temperature sensor is positioned within a battery module casing of a battery module. In some examples, the controller is in electronic communication with the pressure and temperature sensor and configured to receive a plurality of detected pressure signals and a plurality of detected temperature signals, calculate a detected pressure-to-temperature value, calculate a pressure-to-temperature difference value, and, in response to determining that the pressure-to-temperature difference value is outside a tolerance threshold, generate a leakage warning signal associated with the battery module.

FIG. 1

EP 4 325 630 A2

**Description**

**FIELD OF THE INVENTION**

The present disclosure relates generally to apparatuses, systems, and methods for detecting leakage associated with battery modules such as, but not limited to, hermetically sealed battery modules, ingress protection (IP) sealed battery modules, and/or the like.

More particularly, various embodiments of the present disclosure provide example battery module leakage detection devices (as well as example methods carried out by example battery module leakage detection devices) for generating leakage warning signals in response to detecting a leakage associated with a battery module (including, but not limited to, hermetically sealed battery modules and IP sealed battery modules).

**BACKGROUND**

The term "battery module" refers to a device that includes multiple battery cells packaged together within the same battery module casing. A battery module may be manufactured through a sealing process (such as, but not limited to, a hermetic sealing process or an ingress protection (IP) sealing process) to isolate and protect battery cells within the battery module from the outside environment.

Battery modules can be implemented to provide power to transportation systems such as, but not limited to, electric vehicles (EVs), electric motorcycles, electric bicycles, electric scooters, and/or the like. In many implementations, battery modules are prone to cracking that can compromise sealings of battery modules and result in leakages of the battery modules (such as, but not limited to, leakage of liquid from outside environment into the battery modules, leakage of electrolytes from battery cells within the battery modules, and/or the like).

Applicant has identified many deficiencies and problems associated with existing methods, apparatus, and systems related to detecting leakages from battery modules.

**BRIEF SUMMARY**

Various embodiments described herein relate to methods, apparatuses, and systems that provide technical advantages and benefits on detecting leakage in battery modules.

In accordance with various embodiments of the present disclosure, a battery module leakage detection device is provided.

In some embodiments, the battery module leakage detection device comprises a pressure and temperature sensor and a controller. In some embodiments, the pressure and temperature sensor is positioned within a battery module casing of a battery module. In some embodiments, the controller is in electronic communication with the pressure and temperature sensor.

In some embodiments, the controller is configured to: receive a plurality of detected pressure signals and a plurality of detected temperature signals from the pressure and temperature sensor; calculate a detected pressure-to-temperature value based on the plurality of detected pressure signals and the plurality of detected temperature signals; calculate a pressure-to-temperature difference value between the detected pressure-to-temperature value and a baseline pressure-to-temperature value associated with the battery module; and in response to determining that the pressure-to-temperature difference value is outside a tolerance threshold, generate a leakage warning signal associated with the battery module.

In some embodiments, the battery module comprises: a plurality of battery cells positioned within the battery module casing; and a battery management system positioned within the battery module casing and in electronic communication with the controller.

In some embodiments, the plurality of detected pressure signals indicates a plurality of detected pressure values associated with the battery module. In some embodiments, the plurality of detected temperature signals indicates a plurality of detected temperature values associated with the battery module.

In some embodiments, the battery module is manufactured based on a hermetic sealing process.

In some embodiments, the controller is configured to: receive a baseline pressure signal indicating a baseline pressure value and a baseline temperature signal indicating a baseline temperature value that are associated with a baseline battery module that is hermetically sealed; and calculate the baseline pressure-to-temperature value by dividing the baseline pressure value by the baseline temperature value.

In some embodiments, the controller is configured to: calculate the detected pressure-to-temperature value based on dividing a detected pressure value of the plurality of detected pressure values by a detected temperature value of the plurality of detected temperature values.

In some embodiments, the controller is configured to: in response to determining that the detected pressure-to-temperature value is below the baseline pressure-to-temperature value, generate the leakage warning signal indicating a crack on the battery module casing.

In some embodiments, the controller is configured to: calculate a crack size estimation value associated with the crack on the battery module casing based on the pressure-to-temperature difference value.

In some embodiments, the controller is configured to: in response to determining that the detected pressure-to-temperature value is above the baseline pressure-to-temperature value, generate the leakage warning signal indicating a gas release within the battery module casing.

In some embodiments, the controller is configured to: calculate a gas volume estimation value associated with the gas release within the battery module casing based on the pressure-to-temperature difference value.

In some embodiments, the battery module is manufactured based on an ingress protection (IP) process.

In some embodiments, the controller is configured to: receive a plurality of baseline pressure signals indicating a plurality of baseline pressure values and a plurality of baseline temperature signals indicating a plurality of baseline temperature values that are associated with a baseline battery module that is IP sealed; calculate a baseline pressure ramp value between a previous baseline pressure value and a subsequent baseline pressure value from the plurality of baseline pressure values; calculate a baseline temperature ramp value between a previous baseline temperature value and a subsequent baseline temperature value from the plurality of baseline temperature values; and calculate the baseline pressure-to-temperature value by dividing the baseline pressure ramp value by the baseline temperature ramp value.

In some embodiments, the controller is configured to: calculate a detected pressure ramp value between a previously detected pressure value and a subsequently detected pressure value from the plurality of detected pressure values; calculate a detected temperature ramp value between a previously detected temperature value and a subsequently detected temperature value from the plurality of detected temperature values; and calculate the detected pressure-to-temperature value by dividing the detected pressure ramp value by the detected temperature ramp value.

In some embodiments, the controller is configured to: in response to determining that the detected pressure-to-temperature value is below the baseline pressure-to-temperature value, generate the leakage warning signal indicating a crack on the battery module casing.

In some embodiments, the controller is configured to: calculate a crack size estimation value associated with the crack on the battery module casing based on the pressure-to-temperature difference value.

In accordance with various embodiments of the present disclosure, a computer-implemented method for detecting battery module leakage is provided. In some embodiments, the computer-implemented method comprises receiving a plurality of baseline pressure signals indicating a plurality of baseline pressure values and a plurality of baseline temperature signals indicating a plurality of baseline temperature values that are associated with a baseline battery module that is IP sealed; calculating a baseline pressure ramp value between a previous baseline pressure value and a subsequent baseline pressure value from the plurality of baseline pressure values; calculating a baseline temperature ramp value between a previous baseline temperature value and a subsequent baseline temperature value from the plurality of baseline temperature values; and calculating the baseline pressure-to-temperature value by dividing the baseline pressure ramp value by the baseline temperature ramp value.

In accordance with various embodiments of the present disclosure, a computer program product for detecting battery module leakage is provided. In some embodiments, the computer program product comprises at least one non-transitory computer-readable storage medium having computer-readable program code portions stored therein. In some embodiments, the computer-readable program code portions comprise an executable portion configured to receive a plurality of detected pressure signals and a plurality of detected temperature signals from the pressure and temperature sensor; calculate a detected pressure-to-temperature value based on the plurality of detected pressure signals and the plurality of detected temperature signals; calculate a pressure-to-temperature difference value between the detected pressure-to-temperature value and a baseline pressure-to-temperature value associated with the battery module; and in response to determining that the pressure-to-temperature difference value is outside a tolerance threshold, generate a leakage warning signal associated with the battery module.

The foregoing illustrative summary, as well as other exemplary objectives and/or advantages of the disclosure, and the manner in which the same are accomplished, are further explained in the following detailed description and its accompanying drawings.

## BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 illustrates an example portion of an example exploded view of an example battery module in accordance with some embodiments of the present disclosure;

FIG. 2 illustrates an example block diagram showing an example battery module leakage detection device in accordance with some embodiments of the present disclosure;

FIG. 3 illustrates an example method in accordance with some embodiments of the present disclosure;

FIG. 4 illustrates an example method in accordance with some embodiments of the present disclosure;

FIG. 5 illustrates an example method in accordance with some embodiments of the present disclosure;

FIG. 6 illustrates an example method in accordance with some embodiments of the present disclosure;

FIG. 7 illustrates an example diagram showing example temperature values and example pressure values associated with a battery module that is hermetically sealed in accordance with some embodiments of the present disclosure;

FIG. 8 illustrates an example method in accordance with some embodiments of the present disclosure;

FIG. 9 illustrates an example method in accordance with some embodiments of the present disclosure;

FIG. 10 illustrates an example method in accordance with some embodiments of the present disclosure;

FIG. 11 illustrates an example diagram showing example pressure values and example pressure values associated with a battery module that is ingress protection (IP) sealed in accordance with some embodiments of the present disclosure; and

FIG. 12 illustrates an example diagram showing example pressure values and example pressure values associated with a battery module that was manufactured through an ingress protection sealing process but with leakage in accordance with some embodiments of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, voltage/current, data and/or information may be transmitted to and/or received from these elements or components.

As described above, a battery module comprises multiple battery cells packaged together within the same battery module casing. In some embodiments, an example battery module is manufactured through a sealing process to isolate and protect battery cells within the battery module from the outside environment.

As an example, an example battery module may be ingress protection (IP) sealed. In such an example, the example battery module provides a battery module casing for housing battery cells, and such a battery module casing is not only waterproof and dust proof, but also provides one or more mechanisms for releasing pressure within the battery module.

In some embodiments, an IP sealed battery module may be manufactured through an IP sealing process. The battery module casing of the battery module may comprise a battery module casing top cover and a battery module casing bottom container. During the IP sealing process, the battery module casing top cover and the battery module casing bottom container may be sealed to one another through, such as, but not limited to, one or more elastomeric O-ring seals, one or more elastomer liners, and/or the like. Additionally, or alternatively, an IP sealing process may comprise gasketing the perimeters of the battery module casing top cover with the perimeters of the battery module casing bottom container. Additionally, or alternatively, an example battery module may be IP sealed through other IP sealing processes and/or other IP sealing mechanisms.

As described above, the battery module casing of an IP sealed battery module provides one or more mechanisms for releasing pressure from within the battery module. For example, as a part of the IP sealing process, one or more pressure relief valves are disposed and/or formed on the battery module casing of the battery module. Such pressure relief valves can regulate pressure within the battery module. For example, when the inner pressure value of the battery module exceeds a threshold pressure value (for example, due to an increase of temperature within the battery module), the one or more pressure relief valves may be triggered / opened, releasing pressure that is built up within the battery module.

While the description above provides an example of a pressure releasing mechanism for a battery module that is IP sealed, it is noted that the scope of the present disclosure is not limited to the description above. In some examples, an example IP sealed battery module may comprise one or more additional and/or alternative pressure releasing mechanisms. For example, a battery module casing of an IP sealed battery module may comprise one or more vent membrane materials (such as, but not limited to, polytetrafluoroethylene polymer (PTFE) membranes), which allows air to flow through and prevent water, dust, and/or the like from entering the battery module.

As another example, an example battery module may be hermetically sealed. In such an example, the example battery module provides a battery module casing for housing battery cells, and such a battery module casing is waterproof, dust proof, and airproof. In other words, the battery module casing of the battery module creates an airtight enclosure for battery cells, so that there is no passage of air, water, and dust between the enclosure within the battery module casing and the environment outside the battery module casing.

In some embodiments, a hermetically sealed battery module may be manufactured through a hermetic sealing process. Similar to those described above, the battery module casing of the battery module may comprise a battery module casing top cover and a battery module casing bottom container. During the hermetic sealing process, the battery module casing top cover and the battery module casing bottom container may be hermetically sealed to one another through, such as, but not limited to, one or more elastomeric O-ring seals, one or more elastomer liners, and/or the like. Additionally, or alternatively, a hermetic sealing process may comprise gasketing the perimeters of the battery module casing top cover with the perimeters of the battery module casing bottom container. Additionally, or alternatively, an example battery module may be hermetically sealed through other hermetic sealing processes and/or other hermetic sealing mechanisms.

In comparison with the IP sealing process, the hermetic sealing process does not provide any mechanisms for releasing pressure from within the battery module. In other words, the battery module casing of a hermetically sealed battery module does not comprise any pressure releasing mechanisms (for example, the battery module casing does not comprise any pressure relief valve). In other words, there is no exchange of air between inside the hermetically sealed battery module and outside the hermetically sealed battery module.

As described above, battery modules can be implemented to provide power to many systems. For example, EVs use one or more IP sealed battery modules as power sources. As another example, hermetically sealed battery modules may be applied in, such as but not limited to, industrial battery banks. However, battery modules are prone to leakage that is caused by cracking and/or thermal runaway, compromising the seals of the battery modules.

For example, an IP sealed battery module that is used in an EV is subject to shaking and vibration from the EV. Through wear and tear, the battery module casing of the IP sealed battery module may crack, causing one or more gaps or cracks to be formed on the battery module casing. In such an example, conductive substances (such as, but not limited to, water) may leak into the battery module casing through the one or more gaps or cracks, creating ingress-initiated short circuit of battery cells within the battery module.

Another example, many battery modules face the technical challenges of thermal runaway. Thermal runaway may be caused by mechanical abuse (such as, but not limited to, puncture of the battery module), environmental issues (such as, but not limited to, a high environmental temperature) and/or internal short circuit (for example, one of the battery cells within the battery module short-circuited with another battery cell). For example, when the heat generated by a battery cell in the battery module exceeds the amount of heat released into the surrounding environment, the internal temperature of the battery module continues rising, creating a domino effect where other battery cells in the battery module decompose and swell. The decomposition and swelling of battery cells in the battery module can release heat and gas, which causes rapidly increasing temperatures and pressures and may further cause rupture of the battery module casing of the battery module.

Some devices and methods may detect battery module leakage based on detecting the humidity within the battery module. For example, such devices may comprise a humidity sensor that generates humidity detection signals indicating the humidity levels within the battery module casing of the battery module. In such an example, a rapid increase of humidity level within the battery module casing of the battery module may likely be caused by liquid leaking into the battery module (for example, through one or more cracks or gaps on the battery module casing of the battery module). In other words, the time it takes to reach a certain amount of humidity level increase is shorter when there is leakage. As such, when the rate of humidity level increase within the battery module casing of the battery module is above a threshold (e.g. when it takes less time to achieve a certain amount of humidity level increase), such devices and methods determine that there is a leakage of the battery module.

However, humidity-based leakage detection devices and methods are plagued with technical limitations. For example, the humidity levels at different locations within the battery module casing of the battery module can be different, and the rate of humidity level increase may vary based on where the humidity sensor is located. In such an example, a rapid increase of humidity level may be due to the placement / location of the humidity sensor, rather than due to leakage. The location-specific nature of humidity levels within the battery module casing can render humidity-based leakage detection devices and methods ineffective and even invalid.

Various embodiments of the present disclosure overcome these technical challenges and difficulties, and provide various technical advantages and improvements.

In particular, various embodiments of the present disclosure provide example apparatuses, systems, and methods for detecting leakage associated with battery modules based on temperature and pressure within the battery modules. For example, example apparatuses, systems, and methods in accordance with some embodiments of the present disclosure utilize a pressure and temperature sensor that is positioned with the battery module casing and generates detected pressure signals and detected temperature signals. In some embodiments, the detected pressure signals and detected temperature signals are provided to a controller, which determines whether there is leakage based on the detected pressure signals and detected temperature signals. In some embodiments, when the controller determines that there is leakage, the controller generates leakage warning signal(s).

In some embodiments, example methods, systems, and apparatuses for detecting leakage (such as, but not limited to, gas leak, crack, and/or the like) in a hermetically sealed battery module are provided. For example, an example battery module leakage detection device for detecting leakage in a hermetically sealed battery module comprises a pressure and temperature sensor. In some embodiments, the example battery module leakage detection device monitors pressure variation within the battery module casing in relation to the temperature.

For example, pressure within the battery module casing can fluctuate during the charging and discharging cycles because of thermal variations. In some embodiments, the example battery module leakage detection device characterizes these pressure variations in a baseline battery module (that is hermetically sealed and without any crack) based on temperature trend. For example, the example battery module leakage detection device calculates pressure-to-temperature values associated with the hermetically sealed battery module. In some embodiments, such pressure-to-temperature values (along with a certain amount of tolerance) may be established as baseline data for detecting leakage in the hermetically sealed battery module. After establishing the baseline data, the example battery module leakage detection device monitors pressure variations in a battery module that is of the same type as the baseline battery module (e.g. also hermetically sealed), and calculates detected pressure-to-temperature values. When the detected pressure-to-temperature values are below the baseline data, various embodiments of the present disclosure may determine that there is a leakage of the battery module due to a crack on the battery module casing. When the detected pressure-to-temperature values are above the baseline data, various embodiments of the present disclosure may determine that there is gas released by one or more battery cells within the battery module casing of the battery module due to thermal runaway.

In some embodiments, example methods, systems, and apparatuses for detecting leakage (such as, but not limited to, gas leak, crack, and/or the like) in an IP sealed battery module are provided. For example, an example battery module leakage detection device for detecting leakage in an IP sealed battery module comprises a pressure and temperature sensor. The example battery module leakage detection device detects leakage based on pressure within the battery module casing as a function of temperature within the battery module casing. In other words, the battery module leakage detection device uses temperature within the battery module casing as a parameter in determining whether there is leakage (e.g. gas leak or crack on the battery module casing) in the IP sealed battery module.

For example, the battery module leakage detection device may establish baseline data based on calculating baseline pressure ramp values and baseline temperature ramp values. In other words, the pressure ramp value with the temperature ramp value in a baseline battery module (that is IP sealed and without any crack) is used as baseline data. After establishing the baseline data, the example battery module leakage detection device calculates baseline pressure ramp values and baseline temperature ramp values associated with a battery module that is of the same type as the baseline battery module (e.g. also IP sealed), and calculates detected pressure-to-temperature values.

When there is a leakage (for example, when there is a crack on the battery module casing of the IP sealed battery module), the pressure ramp up rate will be lower and may not trigger the pressure relief valves of the battery module casing. Even if the pressure does trigger the pressure relief valves, it may take a prolonged time to vent and release pressure as compared to that from the baseline data. As such, when the detected pressure-to-temperature values are below the baseline data, various embodiments of the present disclosure may determine that there is a leakage of the battery module due to a crack on the battery module casing.

As illustrated above and will be described in further details herein, various embodiments of the present disclosure can detect battery module leakage in a variety of implementations. For example, various embodiments may be implemented to detect leakage / cracking of a battery module in an EV. With EV market scaling up and EV field issues and incidents arising, various embodiments of the present disclosure can alert the user upfront when a battery module leakage is detected, avoiding ingress and potential thermal runaway conditions and increasing the safety of operating EVs.

While the example above provides an example implementation of detecting leakage / cracking of a battery module for an EV, it is noted that the scope of the present disclosure is not limited to this example implementation.

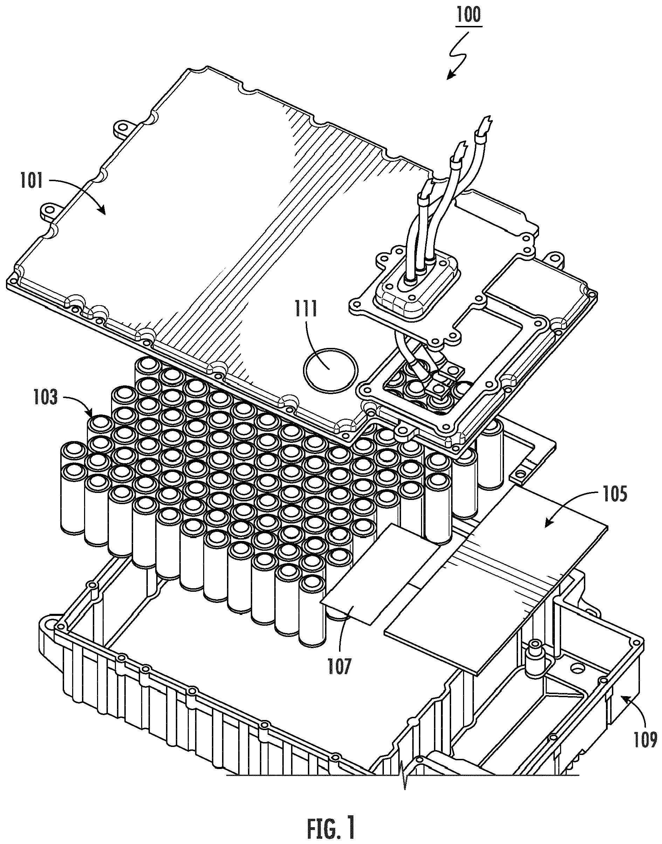

Referring now to FIG. 1, an example portion of an example exploded view of an example battery module 100 in accordance with some embodiments of the present disclosure is illustrated.

In the example shown in FIG. 1, the example battery module 100 comprises a battery module casing top cover 101 and a battery module casing bottom container 109. In some embodiments, the battery module casing top cover 101 and the battery module casing bottom container 109 are sealed to one another, defining a battery module casing that provides an enclosure for housing various components (such as, but not limited to, a plurality of battery cells 103, a battery management system 105, and a battery module leakage detection device 107).

In some embodiments, the battery module casing defined by the battery module casing top cover 101 and the battery module casing bottom container 109 provide an IP seal for the battery module 100. For example, an IP sealing process may comprise gasketing the perimeters of the battery module casing top cover 101 with the perimeters of the battery module casing bottom container 109. Additionally, or alternatively, the battery module casing top cover 101 and the battery module casing bottom container 109 may be sealed to one another through, such as, but not limited to, one or more elastomeric O-ring seals, one or more elastomer liners, and/or the like. As shown in FIG. 1, the battery module casing top cover 101 comprises a pressure relief valve 111 for releasing pressure from within the battery module 100 when the pressure inside the battery module 100 exceeds a threshold.

In some embodiments, the battery module casing defined by the battery module casing top cover 101 and the battery module casing bottom container 109 may provide a hermetic seal for the battery module 100. Similar to those described above, the hermetic sealing process may comprise gasketing the perimeters of the battery module casing top cover 101 with the perimeters of the battery module casing bottom container 109. Additionally, or alternatively, the battery module casing top cover 101 and the battery module casing bottom container 109 may be sealed to one another through, such as, but not limited to, one or more elastomeric O-ring seals, one or more elastomer liners, and/or the like. When the battery module casing provides a hermetic seal, the battery module casing top cover 101 (and the battery module casing bottom container 109) does not comprise any pressure relief valves.

In the example shown in FIG. 1, the example battery module 100 comprises a plurality of battery cells 103 and a battery management system 105.

In some embodiments, the plurality of battery cells 103 are positioned within the battery module casing that is defined by the battery module casing top cover 101 and the battery module casing bottom container 109. In some embodiments, the plurality of battery cells 103 comprises one or more types of battery cells such as, but not limited to, lithium batteries, lithium-ion batteries, nickel-metal hydride batteries, lead-acid batteries, ultracapacitors, and/or the like.

In some embodiments, the battery management system 105 is positioned within the battery module casing that is defined by the battery module casing top cover 101 and the battery module casing bottom container 109. In some embodiments, the battery management system 105 is an electronic system that monitors the discharging, charging, and/or other factors that are associated with the operation state of the plurality of battery cells 103. For example, the battery management system 105 may be connected to the plurality of battery cells 103 and may comprise a voltage monitor circuit (for example, but not limited to, a voltage supervisor circuit). Additionally, or alternatively, the battery management system 105 may comprise gate circuits such as, but not limited to, metal-oxide-semiconductor field-effect transistors (MOSFETs) to regulate the charging and discharging of the plurality of battery cells 103. Additionally, or alternatively, the battery management system 105 may comprise one or more other circuitries.

In some embodiments, the example battery module 100 comprises a battery module leakage detection device 107. In some embodiments, the battery module leakage detection device 107 comprises a controller and a pressure and temperature sensor.

In some embodiments, the battery module leakage detection device 107 is positioned within the battery module casing (e.g. defined by the enclosure between the battery module casing top cover 101 and the battery module casing bottom container 109 as described above). Because the battery module leakage detection device 107 comprises the pressure and temperature sensor, the pressure and temperature sensor of the battery module leakage detection device 107 is positioned within the battery module casing of a battery module 100.

In some embodiments, the pressure and temperature sensor generates a plurality of detected pressure signals and a plurality of detected temperature signals. In some embodiments, the plurality of detected pressure signals indicates a plurality of detected pressure values associated with the battery module 100 (for example, pressures within the battery module casing defined by the enclosure between the battery module casing top cover 101 and the battery module casing bottom container 109). In some embodiments, the plurality of detected temperature signals indicates a plurality of detected temperature values associated with the battery module 100 (for example, temperatures within the battery module casing defined by the enclosure between the battery module casing top cover 101 and the battery module casing bottom container 109).

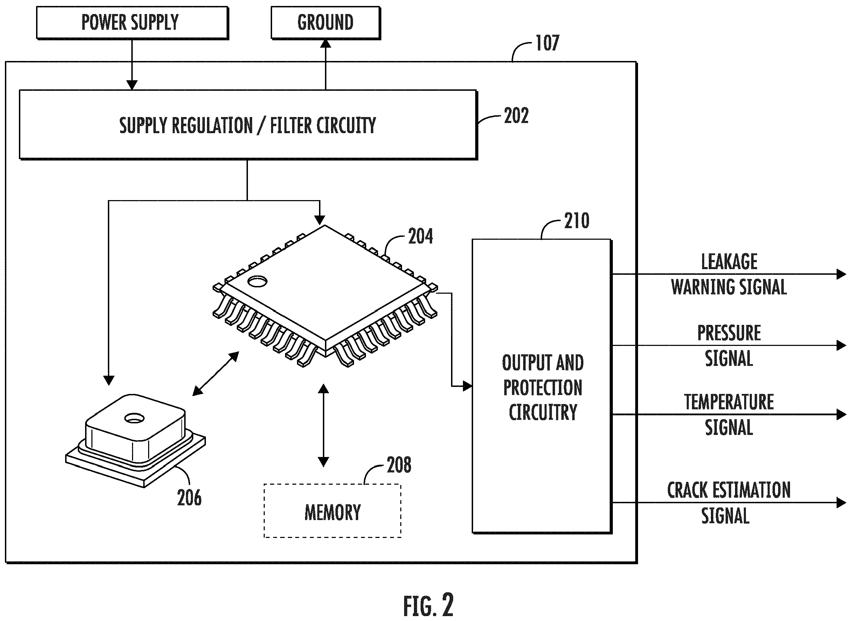

In some embodiments, the battery management system 105 is in electronic communication with the controller of the battery module leakage detection device 107. For example, the battery management system 105 is connected to the battery module leakage detection device 107 and receives data and/or information from the controller of the battery module leakage detection device 107 (such as, but not limited to, leakage warning signals, pressure signals, temperature signals, and/or crack estimation signals). Additional details of the battery module leakage detection device 107 are described herein, including, but not limited to, those described in connection with at least FIG. 2.

Referring now to FIG. 2, an example block diagram showing example components of the example battery module leakage detection device 107 in accordance with some embodiments of the present disclosure is provided.

As described above, the example battery module leakage detection device 107 comprises a pressure and temperature sensor 206 positioned within a battery module casing of a battery module, as well as a controller 204 that is in electronic communication with the pressure and temperature sensor 206.

In some embodiments, the pressure and temperature sensor 206 can detect both pressure and temperature within the battery module casing of the battery module at the same time. For example, the pressure and temperature sensor 206 may comprise a pressure sensor and a temperature sensor that are secured within a single transducer package. As an example, the pressure and temperature sensor 206 may comprise a capacitive sensing element that translates mechanical deflection due to ambient pressure into change in capacitance, which in turn can be determined based on a change in voltage output. Additionally, or alternatively, the pressure and temperature sensor 206 may comprise a piezoresistive silicon pressure sensing element that offers a digital or analog output for reading pressure over a specified full scale pressure span and temperature range. Additionally, or alternatively, the pressure and temperature sensor 206 may comprise a thermistor that translates temperature change to resistance change, which can in turn be determined based on a change in voltage output.

In some embodiments, the pressure and temperature sensor 206 may be in the form of ABP2 series sensors that are manufactured by Honeywell®.

While the description above provides an example of pressure and temperature sensor 206, it is noted that the scope of the present disclosure is not limited to the description above. In some examples, an example pressure and temperature sensor 206 may comprise one or more additional and/or alternative elements to detect pressure and/or temperature.

As described above, the pressure and temperature sensor 206 is positioned within a battery module casing of a battery module. As such, the pressure and temperature sensor 206 can generate detected pressure signals that indicate pressures within the battery module casing of the battery module, as well as detected temperature signals that indicate temperatures within the battery module casing of the battery module. In some embodiments, the detected pressure signals and the detected temperature signals are non-transitory.

In some embodiments, the pressure and temperature sensor 206 and the controller 204 are in electronic communications with one another. For example, the controller 204 receives the detected pressure signals and the detected temperature signals from the pressure and temperature sensor 206.

As will be understood, the controller 204 may be embodied in a number of different ways. For example, the controller 204 may be embodied as one or more complex programmable logic devices (CPLDs), microprocessors, multi-core processors, coprocessing entities, application-specific instruction-set processors (ASIPs), and/or controllers. Further, the controller 204 may be embodied as one or more other processing devices or circuitry.

In the present disclosure, the term circuitry may refer to an entirely hardware embodiment or a combination of hardware and computer program products. Thus, the controller 204 may be embodied as integrated circuits, application specific integrated circuits (ASICs), field programmable gate arrays (FPGAs), programmable logic arrays (PLAs), hardware accelerators, other circuitry, and/or the like. As will therefore be understood, the controller 204 may be configured for a particular use or configured to execute instructions stored in volatile or non-volatile media or otherwise accessible to the controller 204. As such, whether configured by hardware or computer program products, or by a combination thereof, the controller 204 may be capable of performing steps or operations according to embodiments of the present disclosure when configured accordingly.

In some embodiments, the example battery module leakage detection device 107 comprises a memory 208 that is in electronic communication with the controller 204. For example, the controller 204 may be in communication with the memory 208 via a bus. The memory 208 is non-transitory and may include, for example, one or more volatile and/or non-volatile memories. For example, the one or more volatile memories may include, but not limited to, RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. Additionally, or alternatively, the one or more non-volatile memories may include, but are not limited to, hard disks, ROM, PROM, EPROM, EEPROM, flash memory, MMCs, SD memory cards, Memory Sticks, CBRAM, PRAM, FeRAM, RRAM, SONOS, racetrack memory, and/or the like. In accordance with various embodiments of the present disclosure, for example, the memory 208 may be an electronic storage device (*e.g.*, a computer-readable storage medium). The memory 208 may be configured to store information, data, content, applications, instructions, or the like for enabling the apparatus to carry out various functions in accordance with example embodiments of the present disclosure.

In some embodiments, the example battery module leakage detection device 107 comprises a supply regulation / filter circuitry 202. In some embodiments, the supply regulation / filter circuitry 202 receives power from a power supply (such as, but not limited to, a battery) and conveys power to the other components of the battery module leakage detection device 107 (such as, but not limited to, the pressure and temperature sensor 206 and/or the controller 204). In some embodiments, the supply regulation / filter circuitry 202 is connected to the ground to provide safety. In some embodiments, the supply regulation / filter circuitry 202 may comprise one or more circuits that regulate the flow of power from the power source to the battery module leakage detection device 107 (such as, but not limited to, one or more MOSFETs described above). Additionally, or alternatively, the supply regulation / filter circuitry 202 may comprise one or more other circuits.

In some embodiments, the example battery module leakage detection device 107 comprises an output and protection circuitry 210 in electronic communication with the controller 204. In some embodiments, the supply regulation / filter circuitry 202 receives signals from the controller 204, including, but not limited to, leakage warning signals, pressure signals, temperature signals, and crack estimation signals. In some embodiments, the leakage warning signals, the pressure signals, the temperature signals, and the crack estimation signals are non-transitory.

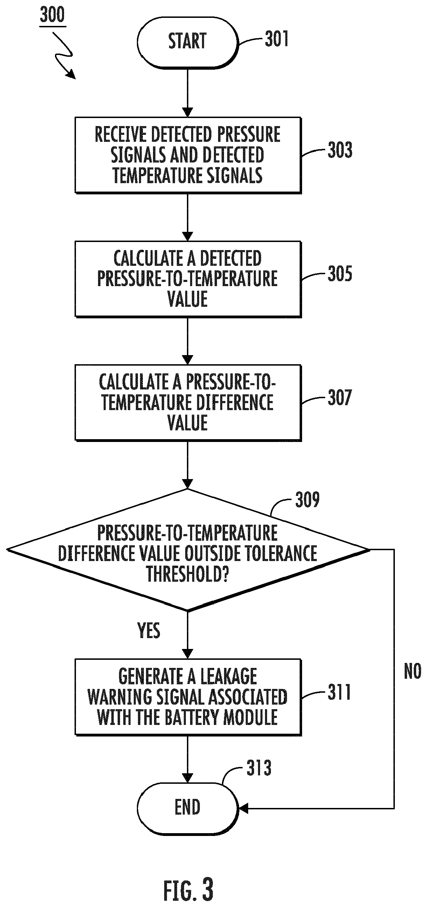

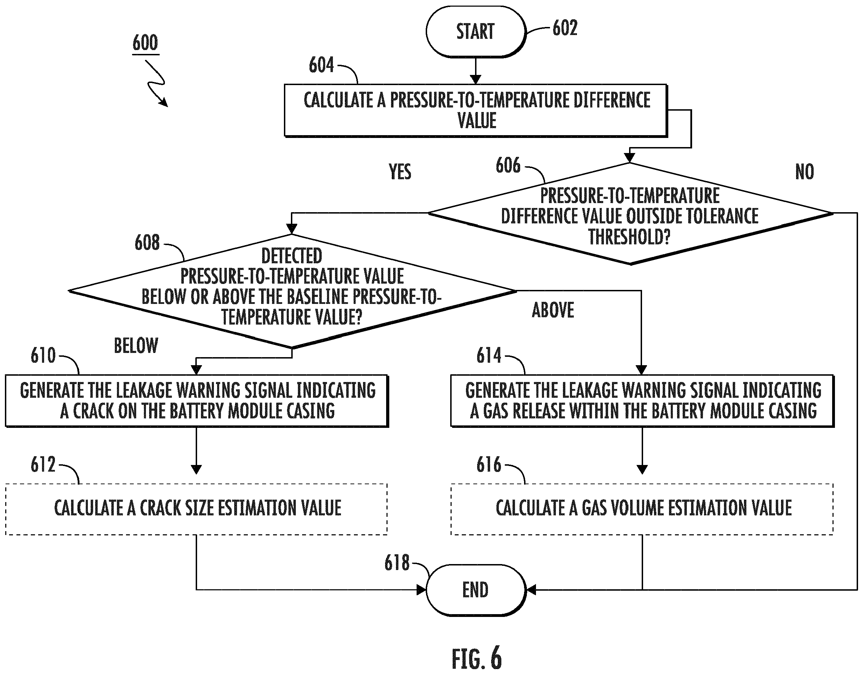

For example, the output and protection circuitry 210 receives a leakage warning signal from the controller 204. In some embodiments, the leakage warning signal indicates that there is a leakage of the battery module (for example, due to a crack on the battery module casing or due to the gas released from a battery cell within the battery module). Additional details associated with the leakage warning signal are described herein, including but not limited to, those described in connection with at least FIG. 3, FIG. 6, and FG. 10.

Additionally, or alternatively, the output and protection circuitry 210 receives a pressure signal from the controller 204. In some embodiments, the pressure signal indicates a detected pressure within the battery module casing of a battery module.

Additionally, or alternatively, the output and protection circuitry 210 receives a temperature signal from the controller 204. In some embodiments, the temperature signal indicates a detected temperature within the battery module casing of a battery module.

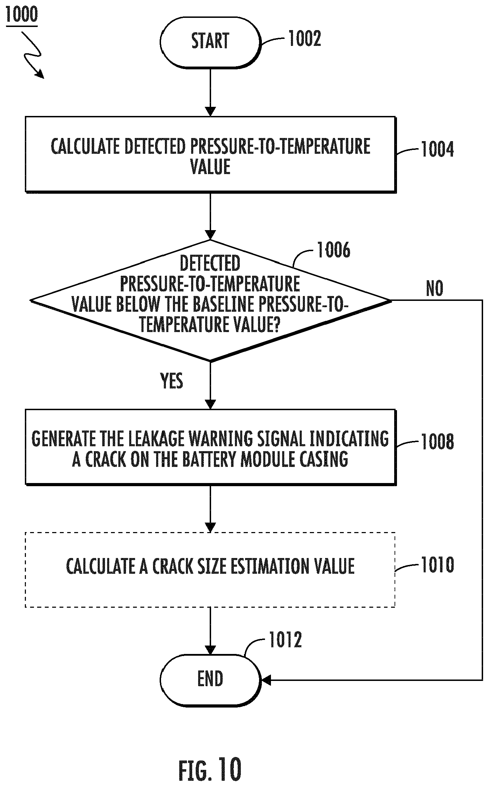

Additionally, or alternatively, the output and protection circuitry 210 receives a crack estimation signal from the controller 204. In some embodiments, the crack estimation signal indicates a crack size estimation value associated with a crack on the battery module casing of the battery module. Additional details associated with the crack estimation signal are described herein, including but not limited to, those described in connection with at least FIG. 6 and FIG. 10.

In some embodiments, the output and protection circuitry 210 transmits these signals to other electronic components (such as, but not limited to, a battery management system described above). For example, the output and protection circuitry 210 may comprise one or more networks and/or communication interfaces (such as, but not limited to, a data bus).

In some embodiments, the output and protection circuitry 210 comprises one or more protection circuits that provide a failsafe in the event that there is a high current that flows out of the battery module leakage detection device 107 and/or a current that flows back to the battery module leakage detection device 107. For example, the output and protection circuitry 210 may comprise reverse-current circuits such as, but not limited to, one or more diodes.

Additionally, or alternatively, the output and protection circuitry 210 may comprise one or more other circuit(s).

Various methods described herein including, for example, example methods as shown in FIG. 3 to FIG. 6 and FIG. 8 to FIG. 10, provide various technical benefits and advantages such as improving the accuracy and responsiveness in detecting leakage in battery modules.

It is noted that each block of the flowchart, and combinations of blocks in the flowchart, may be implemented by various means such as hardware, firmware, circuitry and/or other devices associated with execution of software including one or more computer program instructions. For example, one or more of the procedures described in FIG. 3 to FIG. 6 and FIG. 8 to FIG. 10 may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 3, an example method 300 in accordance with some embodiments of the present disclosure is illustrated. The example method 300 provides technical advantages and benefits such as, but not limited to, improving the accuracy and responsiveness in detecting leakage in battery modules.

In the example shown in FIG. 3, the example method 300 starts at step/operation 301. Subsequent to and/or in response to step/operation 301, the example method 300 proceeds to step/operation 303. At step/operation 303, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives detected pressure signals and detected temperature signals.

In some embodiments, the controller receives a plurality of detected pressure signals and a plurality of detected temperature signals from a pressure and temperature sensor. As described above, the pressure and temperature sensor is positioned within a battery module casing of a battery module. As such, the plurality of detected pressure signals indicates a plurality of detected pressure values associated with the battery module, and the plurality of detected temperature signals indicates a plurality of detected temperature values associated with the battery module.

In some embodiments, each of the plurality of detected pressure values may be in the unit of pounds per square inch gauge (Psig). In some embodiments, each of the plurality of detected temperature values may be in the unit of Celsius. In some embodiments, the detected pressure values and/or the detected temperature values may be in other unit(s).

Referring back to FIG. 3, subsequent to and/or in response to step/operation 303, the example method 300 proceeds to step/operation 305. At step/operation 305, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a detected pressure-to-temperature value.

In some embodiments, the controller calculates the detected pressure-to-temperature value at step/operation 305 based on the plurality of detected pressure signals and the plurality of detected temperature signals received at step/operation 303. As described above, various embodiments of the present disclosure detect crack in the battery module casing of a battery module based on the pressure within the battery module as related to the temperature within the battery module. In some embodiments, a pressure-to-temperature value refers to a value that represents pressure as a function of temperature. For example, the detected pressure-to-temperature value may be represented by the following equation:

$$R_d = P_d(T_d)$$

In the above equation, $R_d$ is the detected pressure-to-temperature value, $P_d(T_d)$ represents the detected pressure $P_d$ as a function of the detected temperature $T_d$.

In some embodiments, the controller determines a calculation algorithm for the detected pressure-to-temperature value at step/operation 305 based on whether the battery module is manufactured through a hermetic sealing process or through an IP sealing process.

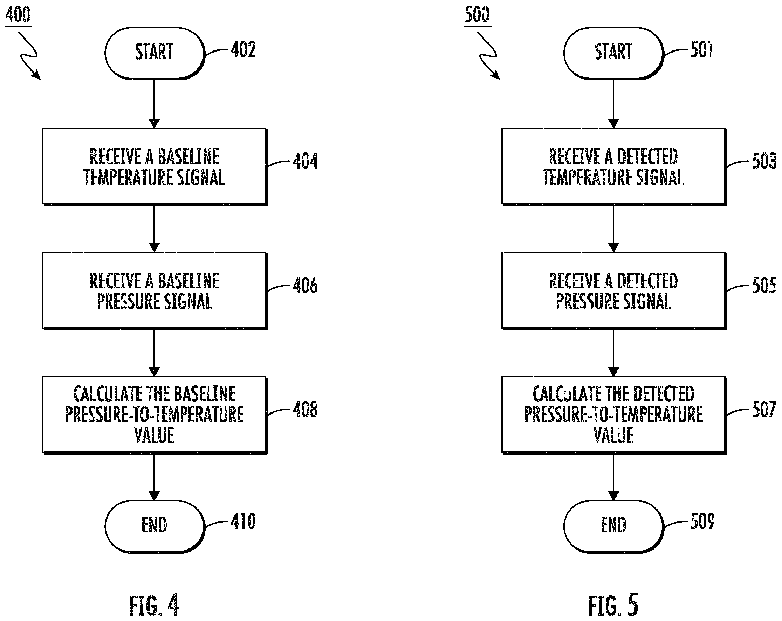

For example, if the battery module is manufactured through a hermetic sealing process, the controller may calculate the detected pressure-to-temperature value based on at least the example method 500 of FIG. 5, details of which are described herein.

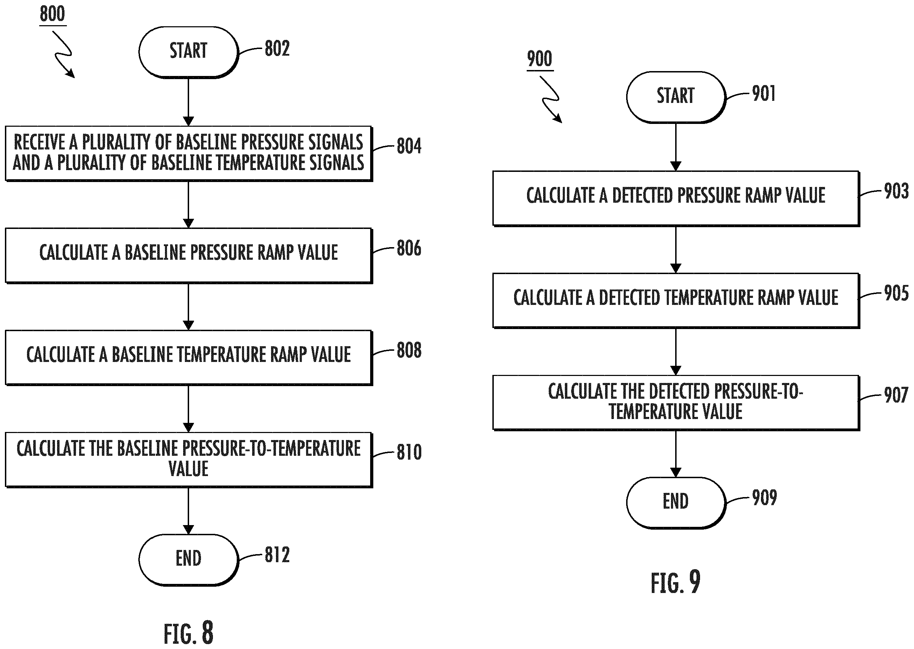

As another example, if the battery module is manufactured through an IP sealing process, the controller may calculate the detected pressure-to-temperature value based on at least the example method 900 of FIG. 9, details of which are described herein.

Referring back to FIG. 3, subsequent to and/or in response to step/operation 305, the example method 300 proceeds to step/operation 307. At step/operation 307, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a pressure-to-temperature difference value.

In some embodiments, the controller calculates the pressure-to-temperature difference value as a difference between the detected pressure-to-temperature value calculated at step/operation 305 and a baseline pressure-to-temperature value associated with the battery module.

In some embodiments, the controller determines a calculation algorithm for the baseline pressure-to-temperature value based on whether the battery module is manufactured through a hermetic sealing process or through an IP sealing process.

For example, if the battery module is manufactured through a hermetic sealing process, the controller may calculate the baseline pressure-to-temperature value based on at least the example method 400 of FIG. 4, details of which are described herein.

As another example, if the battery module is manufactured through an IP sealing process, the controller may calculate the baseline pressure-to-temperature value based on at least the example method 800 of FIG. 8, details of which are described herein.

In some embodiments, a pressure-to-temperature difference value may be represented by the following equation:

$$C = R_b - R_d = P_b(T_b) - P_d(T_d)$$

In the above equation, C is the pressure-to-temperature difference value, $R_d$ is the detected pressure-to-temperature value, $P_d(T_d)$ represents the detected pressure $P_d$ as a function of the detected temperature $T_d$, $R_b$ is the baseline pressure-to-temperature value, $P_b(T_b)$ represents the baseline pressure $P_b$ as a function of the baseline temperature $T_b$.

As shown in the above equation, the pressure-to-temperature difference value factors in not only the difference of pressure between the baseline value and detected value, but also the difference of temperature between the baseline value and detected value.

Referring back to FIG. 3, subsequent to and/or in response to step/operation 307, the example method 300 proceeds to step/operation 309. At step/operation 309, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that determines whether the pressure-to-temperature difference value is outside the tolerance threshold.

As illustrated above, the baseline pressure-to-temperature value characterizes the environment within an ideal battery module (that does not have any crack or leakage) in terms of pressure variance relative to temperature trend. The detected pressure-to-temperature value characterizes the environment within a battery module (that the battery module leakage detection device is implemented to detect crack or leakage) in terms of pressure variance relative to temperature trend. As such, the pressure-to-temperature difference value (i.e. the difference between the baseline pressure-to-temperature value and the detected pressure-to-temperature value) shows how much the environment within the battery module deviates from an environment within an ideal battery module. A significant deviation can indicate that there is a crack on the battery module casing or there is gas release within the battery module.

In some embodiments, the tolerance threshold represents a maximum allowable departure from the baseline pressure-to-temperature value. In other words, the tolerance threshold sets a quantitively measure of whether a deviation is significant. When the pressure-to-temperature difference value is outside the tolerance threshold, it indicates that the detected pressure-to-temperature value deviates so significantly from the baseline pressure-to-temperature value that is likely caused by a leakage associated with the battery module.

For example, the tolerance threshold may be set as 10% of the baseline pressure-to-temperature value. In such an example, if the pressure-to-temperature difference value is more than 10% of the baseline pressure-to-temperature value, it indicates that the detected pressure-to-temperature value deviates significantly from the baseline pressure-to-temperature value, indicating that there is a leakage associated with the battery module. If the pressure-to-temperature difference value is less than 10% of the baseline pressure-to-temperature value, it indicates that the detected pressure-to-temperature value deviates within a tolerance from the baseline pressure-to-temperature value (e.g. does not deviate significantly from the baseline pressure-to-temperature value), indicating that there is no leakage of the battery module.

While the description above provides an example tolerance threshold of 10% of the baseline pressure-to-temperature value, it is noted that the scope of the present disclosure is not limited to the description above. In some examples, an example tolerance threshold may be of other value(s).

Referring back to FIG. 3, if, at step/operation 309, the battery module leakage detection device determines that the pressure-to-temperature difference value is outside the tolerance threshold, the example method 300 proceeds to step/operation 311. At step/operation 311, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that generates a leakage warning signal associated with the battery module.

For example, in response to determining that the pressure-to-temperature difference value is outside a tolerance threshold (for example, more than 10% of the baseline pressure-to-temperature value), the controller generates a leakage warning signal associated with the battery module.

In some embodiments, the leakage warning signal provides an electronic indication (for example, an electronic message, a system message, and/or the like) that there is a leakage associated with the battery module. In some embodiments, the leakage warning signal may indicate that the leakage is caused by a crack on the battery module casing of the battery module. In some embodiments, the leakage warning signal may indicate that the leakage is caused by gas that is released by battery cells within the battery module. Additional details are described in connection with at least FIG. 6 and FIG. 10.

Referring back to FIG. 3, subsequent to and/or in response to step/operation 311, the example method 300 proceeds to step/operation 313 and ends.

If, at step/operation 309, the battery module leakage detection device determines that the pressure-to-temperature difference value is not outside the tolerance threshold, the example method 300 proceeds to step/operation 313 and ends.

For example, when the controller determines that the pressure-to-temperature difference value is not outside the tolerance threshold, the controller determines that the detected pressure-to-temperature value does not deviate significantly from the baseline pressure-to-temperature value. As such, there is likely no leakage associated with the battery module.

As described above, an example battery module leakage detection device may determine whether there is a leakage of a battery module based on pressure-to-temperature values (such as detected pressure-to-temperature values, baseline pressure-to-temperature values, and pressure-to-temperature difference values). In various embodiments of the present disclosure, pressure-to-temperature values (including detected pressure-to-temperature values, baseline pressure-to-temperature values, and pressure-to-temperature difference values) are calculated differently based on whether the battery module is hermetically sealed or IP sealed.

Referring now to FIG. 4 to FIG. 7, example diagrams and flowcharts associated with example calculations of pressure-to-temperature values of a hermetically sealed battery module are illustrated. In other words, the example methods illustrated and described in connection with FIG. 4 to FIG. 7 can be implemented to detect leakage of a battery module that is manufactured based on a hermetic sealing process.

For example, in a battery module that is hermetically sealed, leak can be detected by monitoring pressure variations. In particular, pressure within the battery module fluctuates during the charging and discharging cycles because of thermal variations. When the battery module is in the charging cycle, temperature increases, which in turn causes the pressure to increase. When the battery module is in the discharging cycle, temperature decreases, which in turn causes the pressure to decrease.

In some embodiments, these pressure variations can be characterized for temperature trend as pressure-to-temperature values, and these pressure-to-temperature values (with certain amount of tolerance) will be the baseline data for hermetically sealed battery modules. In some embodiments, a crack can be detected when a detected pressure-to-temperature value is below the baseline pressure-to-temperature value. In some embodiments, a gas release within the battery module (for example, due to an electrolyte leak of battery cells) can be detected when a detected pressure-to-temperature value is above the baseline pressure-to-temperature value.

Referring now to FIG. 4, an example method 400 in accordance with some embodiments of the present disclosure is illustrated. In particular, the example method 400 establishes baseline data for detecting leakage in a hermetically sealed battery module.

In the example shown in FIG. 4, the example method 400 starts at step/operation 402. Subsequent to and/or in response to step/operation 402, the example method 400 proceeds to step/operation 404. At step/operation 404, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives a baseline temperature signal.

In some embodiments, the baseline temperature signal indicates a baseline temperature value that is associated with a baseline battery module that is hermetically sealed. For example, the pressure and temperature sensor is placed within a baseline battery module that is confirmed to be hermetically sealed and without any leakage. In such an example, the baseline temperature value indicates a temperature within an ideal battery module that is hermetically sealed.

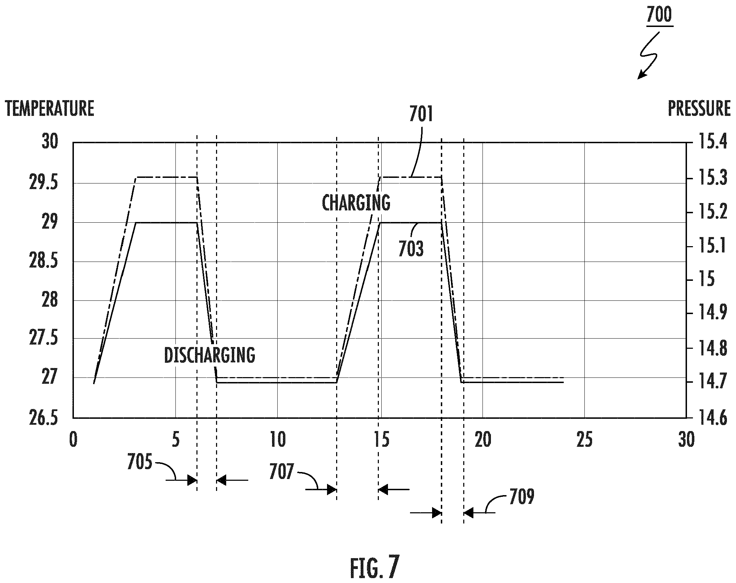

In some embodiments, the temperature within the battery module fluctuates as the battery module charges and discharges. Referring now to FIG. 7, an example diagram 700 illustrates an example temperature value curve 703 associated with a battery module that is hermetically sealed.

As shown in FIG. 7, the hermetically sealed battery module operates between discharging cycles (such as during time period 705 and time period 709) and charging cycles (such as during time period 707).

When the hermetically sealed battery module operates during the discharging cycle (e.g. when the hermetically sealed battery module provides power), the temperature within the hermetically sealed battery module decreases. In the example shown in FIG. 7, the temperature within the hermetically sealed battery module reaches a lowest point at 26.5 degrees Celsius.

When the hermetically sealed battery module operates during the charging cycle (e.g. when the hermetically sealed battery module receives power), the temperature within the hermetically sealed battery module increases. In the example shown in FIG. 7, the temperature within the hermetically sealed battery module reaches a highest point at 29 degrees Celsius.

In this example, when the controller receives the baseline temperature signal, the baseline temperature signal indicates a baseline temperature between 26.5 degrees Celsius and 29 degrees Celsius, depending on the time code associated with the baseline temperature signal (e.g. whether the hermetically sealed battery module is charging or discharging).

Referring back to FIG. 4, at step/operation 406, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives a baseline pressure signal.

In some embodiments, the baseline pressure signal indicates a baseline pressure value that is associated with a baseline battery module that is hermetically sealed. For example, the pressure and temperature sensor is placed within a battery module that is confirmed to be hermetically sealed and without any leakage. In such an example, the baseline pressure value indicates a pressure within an ideal battery module that is hermetically sealed.

In some embodiments, the baseline pressure signal received at step/operation 406 is associated with the same time code as the baseline temperature signal received at step/operation 404. In other words, the baseline pressure signal received at step/operation 406 reflects a baseline pressure value that is detected by the pressure and temperature sensor at the same time as the baseline temperature value from the baseline temperature signal received at step/operation 404.

Referring now to FIG. 7, an example diagram 700 illustrates an example pressure value curve 701 associated with the battery module that is hermetically sealed. As described above, the temperature in the hermetically sealed battery module fluctuates due to the charging and discharging cycles. Because the battery module is hermetically sealed, an increase of the temperature within the battery module causes an increase in the pressure within the battery module, and a decrease of the temperature within the battery module causes a decrease of the temperature within the battery module. The relationship between temperature and pressure is reflected by the example temperature value curve 703 and the example pressure value curve 701 shown in FIG. 7.

In the example shown in FIG. 7, the pressure within the hermetically sealed battery module reaches a lowest point below 14.7 Psig and a highest point above 15.3 Psig. In this example, when the controller receives the baseline pressure signal, the baseline pressure signal indicates a baseline pressure between 14.7 Psig Celsius and 15.3 Psig, depending on the time code associated with the baseline pressure signal (e.g. whether the hermetically sealed battery module is charging or discharging).

Referring back to FIG. 4, subsequent to and/or in response to step/operation 406, the example method 400 proceeds to step/operation 408. At step/operation 408, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates the baseline pressure-to-temperature value.

In some embodiments, the controller calculates the baseline pressure-to-temperature value based on the baseline pressure value from the baseline pressure signal received at step/operation 406 and the baseline temperature value from the baseline temperature signal received at step/operation 404.

In some embodiments, the controller divides the baseline pressure value by the baseline temperature value to calculate the baseline pressure-to-temperature value. For example, the baseline pressure-to-temperature value may be calculated based on the following equation:

$$R_b = P_b(T_b) = \frac{P_b}{T_b}$$

In the above equation, $R_b$ is the baseline pressure-to-temperature value, $P_b$ is the baseline pressure value from the baseline pressure signal received at step/operation 406, $T_b$ is the baseline temperature value from the baseline temperature signal received at step/operation 404, $P_b(T_b)$ represents the baseline pressure $P_b$ as a function of the baseline temperature value $T_b$.

As described above, the baseline pressure signal received at step/operation 406 and the baseline temperature signal received at step/operation 404 are associated with the same time code. As such, the baseline pressure-to-temperature value $R_b$ characterizes the battery module based on the pressure variation relative to the temperature trend within the battery module.

Referring back to FIG. 4, subsequent to and/or in response to step/operation 408, the example method 400 proceeds to step/operation 410 and ends.

Referring now to FIG. 5, an example method 500 in accordance with some embodiments of the present disclosure is illustrated. In particular, the example method 500 calculates a detected pressure-to-temperature value associated with a battery module that is manufactured through a hermetic sealing process.

In some embodiments, the battery module in connection with FIG. 4 and the battery module in connection with FIG. 5 are of the same type. For example, the battery module in connection with FIG. 4 is a battery module that is confirmed to be hermetically sealed and without any leakage. The battery module in connection with FIG. 5 is a battery module that is the same type as the battery module in connection with FIG. 4, but may or may not comprise leakage. In such an example, the detected pressure-to-temperature value provides a basis for determining whether there is a leakage in the battery module in connection with FIG. 5.

In the example shown in FIG. 5, the example method 500 starts at step/operation 501. Subsequent to and/or in response to step/operation 501, the example method 500 proceeds to step/operation 503. At step/operation 503, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives a detected temperature signal.

In some embodiments, the detected temperature signal indicates a detected temperature value that is associated with a battery module, and the battery module leakage detection device determines whether there is a leakage of the battery module. For example, the pressure and temperature sensor is placed within the battery module in order to determine whether there is any leakage. In such an example, the detected temperature value indicates a temperature within the battery module.

Referring back to FIG. 5, at step/operation 505, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives a detected pressure signal.

In some embodiments, the detected pressure signal indicates a detected pressure value that is associated with a battery module, and the battery module leakage detection device determines whether there is a leakage of the battery module. For example, the pressure and temperature sensor is placed within the battery module in order to determine whether there is any leakage. In such an example, the detected pressure value indicates a pressure within the battery module.

Referring back to FIG. 5, subsequent to and/or in response to step/operation 505, the example method 500 proceeds to step/operation 507. At step/operation 507, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates the detected pressure-to-temperature value.

In some embodiments, the controller calculates the detected pressure-to-temperature value based on the detected pressure value from the detected pressure signal received at step/operation 505 and the detected temperature value from the detected temperature signal received at step/operation 503.

In some embodiments, the controller divides the detected pressure value by the detected temperature value to calculate the detected pressure-to-temperature value. For example, the detected pressure-to-temperature value may be calculated based on the following equation:

$$R_d = P_d(T_d) = \frac{P_d}{T_d}$$

In the above equation, $R_d$ is the detected pressure-to-temperature value, $P_d$ is the detected pressure from the detected pressure signal received at step/operation 505, $T_d$ is the detected temperature from the detected temperature signal received at step/operation 503, $P_d(T_d)$ represents the detected pressure $P_d$ as a function of the detected temperature $T_d$.

Referring back to FIG. 5, subsequent to and/or in response to step/operation 507, the example method 500 proceeds to step/operation 509 and ends.

Referring now to FIG. 6, an example method 600 in accordance with some embodiments of the present disclosure is illustrated. In particular, the example method 600 illustrates an example of detecting leakage in a battery module that is manufactured through a hermetic sealing process. The example method 600 provides technical advantages and benefits such as, but not limited to, improving the accuracy and responsiveness in detecting leakage in battery modules.

In the example shown in FIG. 6, the example method 600 starts at step/operation 602. Subsequent to and/or in response to step/operation 602, the example method 600 proceeds to step/operation 604. At step/operation 604, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a pressure-to-temperature difference value.

In some embodiments, the controller calculates the pressure-to-temperature difference value based on the baseline pressure-to-temperature value (for example, calculated in accordance with the example method 400 shown in FIG. 4) and the detected pressure-to-temperature value (for example, calculated in accordance with the example method 500 shown in FIG. 5) that are associated with a hermetically sealed battery module.

In some embodiments, the controller calculates the pressure-to-temperature difference value based on following equation:

$$C = R_b - R_d = P_b(T_b) - P_d(T_d) = \frac{P_b}{T_b} - \frac{P_d}{T_d}$$

In the above equation, C is the pressure-to-temperature difference value, $R_b$ is the baseline pressure-to-temperature value, $R_d$ is the detected pressure-to-temperature value.

Referring back to FIG. 6, subsequent to and/or in response to step/operation 604, the example method 600 proceeds to step/operation 606. At step/operation 606, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that determines whether the pressure-to-temperature difference value is outside the tolerance threshold.

For example, the controller determines whether the pressure-to-temperature difference value is outside the tolerance threshold similar to those described above in connection with at least step/operation 309 of FIG. 3.

If, at step/operation 606, the battery module leakage detection device determines that the pressure-to-temperature difference value is not outside the tolerance threshold, the example method 600 proceeds to step/operation 618 and ends.

For example, when the controller determines that the pressure-to-temperature difference value is not outside the tolerance threshold, the controller determines that the detected pressure-to-temperature value does not deviate significantly from the baseline pressure-to-temperature value. As such, there is likely no leakage associated with the battery module that is hermetically sealed.

Referring back to FIG. 6, if, at step/operation 606, the battery module leakage detection device determines that the pressure-to-temperature difference value is outside the tolerance threshold, the example method 600 proceeds to step/operation 608. At step/operation 608, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that determines whether the detected pressure-to-temperature value is below or above the baseline pressure-to-temperature value.

In some embodiments, when the detected pressure-to-temperature value is below the baseline pressure-to-temperature value, it indicates that the pressure changes slower in response to a temperature change in the battery module (as compared to the pressure change in response to a temperature change in a battery module that is confirmed to be hermetically sealed and does not have leakage). In such an example, the slower pressure change is due to a crack on the battery module casing of the battery module that was originally hermetically sealed. In other words, when there is crack on the battery module casing of a battery module that was manufactured through a hermetic sealing process, the crack releases pressure from within the battery module, causing pressure to change slower in response to a temperature change.

In some embodiments, when the detected pressure-to-temperature value is above the baseline pressure-to-temperature value, it indicates that the pressure changes faster in response to a temperature change in the battery module (as compared to the pressure change in response to a temperature change in a battery module that is confirmed to be hermetically sealed and does not have leakage). In such an example, the faster pressure change is due to gas released by battery cells in the battery module. As described above, thermal runaway in a battery module may cause battery cells within the battery module to release gas (for example, due to electrolytes leaking from the battery cells). In other words, when there is a gas release within the battery module casing of a battery module that was manufactured through a hermetic sealing process, the gas release increases the pressure within the battery module, causing the pressure to change faster in response to a temperature change.

Referring back to FIG. 6, if, at step/operation 608, the battery module leakage detection device determines that the detected pressure-to-temperature value is below the baseline pressure-to-temperature value, the example method 600 proceeds to step/operation 610. At step/operation 610, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that generates the leakage warning signal indicating a crack on the battery module casing.

In some embodiments, in response to determining that the detected pressure-to-temperature value is below the baseline pressure-to-temperature value, the controller generates the leakage warning signal indicating a crack on the battery module casing. In some embodiments, the leakage warning signal provides an electronic indication (for example, an electronic message, a system message, and/or the like) that not only indicates a leakage associated with the battery module, but also indicates that the leakage is caused by a crack on the battery module casing of the battery module.

Referring back to FIG. 6, subsequent to and/or in response to step/operation 610, the example method 600 may optionally proceed to step/operation 612. At step/operation 612, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a crack size estimation value.

In some embodiments, the crack size estimation value indicates an estimated size of the crack on the battery module that causes the leakage. In some embodiments, the controller calculates the crack size estimation value associated with the crack on the battery module casing based on the pressure-to-temperature difference value calculated at step/operation 604. For example, the crack size estimation value is proportional to the pressure-to-temperature difference value. In other words, the bigger the crack on the battery module, the more pressure being released through the crack, and the higher the pressure-to-temperature difference value.

Referring back to FIG. 6, subsequent to and/or in response to step/operation 612 or step/operation 610, the example method 600 proceeds to step/operation 618 and ends.

If, at step/operation 608, the battery module leakage detection device determines that the detected pressure-to-temperature value is above the baseline pressure-to-temperature value, the example method 600 proceeds to step/operation 614. At step/operation 614, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that generates the leakage warning signal indicating a gas release within the battery module casing.

In some embodiments, in response to determining that the detected pressure-to-temperature value is above the baseline pressure-to-temperature value, the controller generates the leakage warning signal indicating a gas release within the battery module casing. In some embodiments, the leakage warning signal provides an electronic indication (for example, an electronic message, a system message, and/or the like) that not only indicates a leakage associated with the battery module, but also indicates that the leakage is caused a gas release within the battery module casing (which, for example, is in turn caused by thermal runaway of battery cells).

Referring back to FIG. 6, subsequent to and/or in response to step/operation 614, the example method 600 may optionally proceed to step/operation 616. At step/operation 616, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a gas volume estimation value.

In some embodiments, the gas volume estimation value indicates an estimated size of the gas released within the battery module that is caused by the thermal runaway of battery cells. In some embodiments, the controller calculates the gas volume estimation value associated with the gas release within the battery module casing based on the pressure-to-temperature difference value calculated at step/operation 604. For example, the gas volume estimation value is proportional to the pressure-to-temperature difference value. In other words, the more gas is released within the battery module, the more pressure being built within the battery module, and the higher the pressure-to-temperature difference value.

Referring back to FIG. 6, subsequent to and/or in response to step/operation 616 or step/operation 614, the example method 600 proceeds to step/operation 618 and ends.

Referring now to FIG. 8 to FIG. 12, example diagrams and flowcharts associated with example calculations of pressure-to-temperature values of an IP sealed battery module are illustrated. In other words, the example methods illustrated and described in connection with FIG. 8 to FIG. 12 can be implemented to detect leakage of a battery module that is manufactured based on an IP sealing process.

In an IP sealed battery module, the pressure within the battery module increases as the temperature increases, until the pressure relief valve is triggered to open and vent the pressure so that the pressure within the battery module equates to atmospheric pressure. In such an example, baseline data can be calculated based on the baseline pressure ramp value and the baseline temperature ramp value, which show the rate at which pressure varies (ramp up or down) in relation to temperature changes. When there is a leak in a battery module that is IP sealed, the pressure ramp rate will be lower and may not trigger the pressure relief valve, resulting in a prolonged time to vent compared to that of the baseline data.

Referring now to FIG. 8, an example method 800 in accordance with some embodiments of the present disclosure is illustrated. In particular, the example method 800 establishes baseline data for detecting leakage in an IP sealed battery module.

In the example shown in FIG. 8, the example method 800 starts at step/operation 802. Subsequent to and/or in response to step/operation 802, the example method 800 proceeds to step/operation 804. At step/operation 804, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that receives a plurality of baseline pressure signals and a plurality of baseline temperature signals.

In some embodiments, the plurality of baseline pressure signals indicate a plurality of baseline pressure values that are associated with a baseline battery module that is IP sealed. In some embodiments, the plurality of baseline temperature signals indicate a plurality of baseline temperature values that are associated with the baseline battery module that is IP sealed.

For example, the pressure and temperature sensor is placed within a battery module that is confirmed to be IP sealed and without any leakage. In such an example, the plurality of baseline pressure values indicate pressures within the battery module that is IP sealed and without any crack or leakage, and the plurality of baseline temperature values indicate temperatures within the battery module that is IP sealed and without any crack or leakage.

Referring back to FIG. 8, subsequent to and/or in response to step/operation 804, the example method 800 proceeds to step/operation 806. At step/operation 806, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a baseline pressure ramp value.

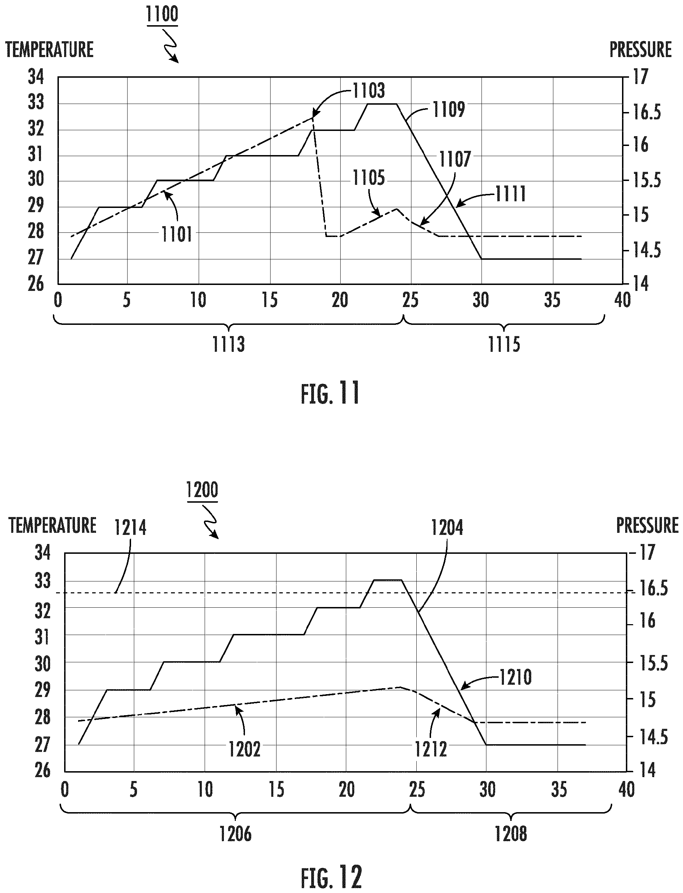

In some embodiments, the pressure within the battery module fluctuates as the pressure relief valve opens and closes. Referring now to FIG. 11, an example diagram 1100 illustrates an example pressure value curve 1101 associated with a battery module that is IP sealed.

In the example shown in FIG. 11, the pressure values in the example pressure value curve 1101 continue to increase until the pressure venting point 1103. At the pressure venting point 1103, the pressure value reaches a pressure venting threshold (for example, 16.6 Psig). After the pressure value reaches the pressure venting threshold, the pressure relief valve of the IP sealed battery module is triggered to open, releasing pressure from within the battery module. Subsequently, pressure value fluctuates (as shown by the pressure value curve portion 1105), and eventually ramps down (as shown by the pressure value curve portion 1107).

In some embodiments, the controller calculates a baseline pressure ramp value between a previous baseline pressure value and a subsequent baseline pressure value from the plurality of baseline pressure values. For example, the controller calculates the baseline pressure ramp value based on the following equation:

$$\Delta P_b = P_{b2} - P_{b1}$$

In the equation above, $\Delta P_b$ is the baseline pressure ramp value, $P_{b2}$ is the subsequently baseline pressure value that is captured at a subsequent time point, $P_{b1}$ is the previously baseline pressure value that is captured at a previous time point. In some embodiments, the previous time point occurs before the subsequent time point.

Referring back to FIG. 8, at step/operation 808, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a baseline temperature ramp value.

In some embodiments, the temperature within the battery module also fluctuates as the pressure relief valve opens and closes. Referring now to FIG. 11, the example diagram 1100 illustrates an example temperature value curve 1109 associated with a battery module that is IP sealed.

In the example shown in FIG. 11, the timeline can be divided based on the temperature values in the example temperature value curve 1109. For example, the timeline may include an exothermic phase 1113 (where the temperature within the battery module increases) and a cool down phase 1115 (where the temperature within the battery module decreases). In particular, after the temperature value reaches a maximum point, the temperature value in the temperature value curve 1109 decreases (as reflected in the temperature value curve portion 1111).

In some embodiments, the controller calculates a baseline temperature ramp value between a previous baseline temperature value and a subsequent baseline temperature value from the plurality of baseline temperature values. For example, the controller calculates the baseline temperature ramp value based on the following equation:

$$\Delta T_b = T_{b2} - T_{b1}$$

In the equation above, $\Delta T_b$ is the baseline temperature ramp value, $T_{b2}$ is the subsequent baseline temperature value that is captured at the subsequent time point, $T_{b1}$ is the previous baseline temperature value that is captured at the previous time point. As described above, the previous time point occurs before the subsequent time point.

Referring back to FIG. 8, subsequent to and/or in response to step/operation 808, the example method 800 proceeds to step/operation 810. At step/operation 810, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates the baseline pressure-to-temperature value.

In some embodiments, the controller calculates the baseline pressure-to-temperature value based on the baseline pressure ramp value calculated at step/operation 806 and the baseline temperature ramp value calculated at step/operation 808.

In some embodiments, the controller divides the baseline pressure ramp value by the baseline temperature ramp value to calculate the baseline pressure-to-temperature value. For example, the baseline pressure-to-temperature value may be calculated based on the following equation:

$$\Delta R_b = \Delta P_b(\Delta T_b) = \frac{\Delta P_b}{\Delta T_b} = \frac{P_{b2} - P_{b1}}{T_{b2} - T_{b1}}$$

In the above equation, $\Delta R_b$ is the baseline pressure-to-temperature value. $\Delta P_b(\Delta T_b)$ represents the baseline pressure ramp value $\Delta P_b$ as a function of the baseline temperature ramp value $\Delta T_b$. Both $P_{b1}$ and $T_{b1}$ are recorded at the same previous time point. Both $P_{b2}$ and $T_{b2}$ are recorded at the same subsequent time point.

Referring back to FIG. 8, subsequent to and/or in response to step/operation 810, the example method 800 proceeds to step/operation 812 and ends.

Referring now to FIG. 9, an example method 900 in accordance with some embodiments of the present disclosure is illustrated. In particular, the example method 900 calculates a detected pressure-to-temperature value associated with a battery module that is manufactured through an IP sealing process. In some embodiments, the battery module leakage detection device determines whether there is a leakage of the battery module. For example, the pressure and temperature sensor is placed within the battery module in order to determine whether there is any leakage.

In the example shown in FIG. 9, the example method 900 starts at step/operation 901. Subsequent to and/or in response to step/operation 901, the example method 900 proceeds to step/operation 903. At step/operation 903, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a detected pressure ramp value.

In some embodiments, the controller calculates a detected pressure ramp value between a previously detected pressure value and a subsequently detected pressure value from the plurality of detected pressure values. For example, the controller calculates the detected pressure ramp value based on the following equation:

$$\Delta P_d = P_{d2} - P_{d1}$$

In the equation above, $\Delta P_d$ is the detected pressure ramp value, $P_{d2}$ is the subsequently detected pressure value that is captured at a subsequent time point, $P_{d1}$ is the previously detected pressure value that is captured at a previous time point. In some embodiments, the previous time point occurs before the subsequent time point.

Referring back to FIG. 9, at step/operation 905, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a detected temperature ramp value.

In some embodiments, the controller calculates the detected temperature ramp value between a previously detected temperature value and a subsequently detected temperature value from the plurality of detected temperature values. For example, the controller calculates the detected temperature ramp value based on the following equation:

$$\Delta T_d = T_{d2} - T_{d1}$$

In the equation above, $\Delta T_d$ is the detected temperature ramp value, $T_{d2}$ is the subsequently detected temperature value that is captured at the subsequent time point, $T_{d1}$ is the previously detected temperature value that is captured at the previous time point. As described above, the previous time point occurs before the subsequent time point.

Referring back to FIG. 9, subsequent to and/or in response to step/operation 905, the example method 900 proceeds to step/operation 907. At step/operation 907, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates the detected pressure-to-temperature value.

In some embodiments, the controller calculates the detected pressure-to-temperature value based on the detected pressure ramp value calculated at step/operation 903 and the detected temperature ramp value calculated at step/operation 905.

In some embodiments, the controller divides the detected pressure ramp value by the detected temperature ramp value to calculate the detected pressure-to-temperature value. For example, the detected pressure-to-temperature value may be calculated based on the following equation:

$$\Delta R_d = \Delta P_d(\Delta T_d) = \frac{\Delta P_d}{\Delta T_d} = \frac{P_{d2} - P_{d1}}{T_{d2} - T_{d1}}$$

In the above equation, $\Delta R_d$ is the detected pressure-to-temperature value. $\Delta P_d(\Delta T_d)$ represents the detected pressure ramp value $\Delta P_d$ as a function of the detected temperature ramp value $\Delta T_d$. Both $P_{d1}$ and $T_{d1}$ are recorded at the same previous time point. Both $P_{d2}$ and $T_{d2}$ are recorded at the same subsequent time point.

Referring back to FIG. 9, subsequent to and/or in response to step/operation 907, the example method 900 proceeds to step/operation 909 and ends.

Referring now to FIG. 10, an example method 1000 in accordance with some embodiments of the present disclosure is illustrated. The example method 1000 provides technical advantages and benefits such as, but not limited to, improving the accuracy and responsiveness in detecting leakage in battery modules.

In the example shown in FIG. 10, the example method 1000 starts at step/operation 1002. Subsequent to and/or in response to step/operation 1002, the example method 1000 proceeds to step/operation 1004. At step/operation 1004, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates the detected pressure-to-temperature value.

In some embodiments, the controller calculates the detected pressure-to-temperature value similar to those described above in connection with at least FIG. 9.

Referring back to FIG. 10, subsequent to and/or in response to step/operation 1004, the example method 1000 proceeds to step/operation 1006. At step/operation 1006, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that determines whether the detected pressure-to-temperature value is below the baseline pressure-to-temperature value.

In some embodiments, the baseline pressure-to-temperature value is calculated in a way similar to those described above in connection with at least FIG. 8.

In some embodiments, when the detected pressure-to-temperature value is below the baseline pressure-to-temperature value, it indicates that the pressure changes slower in response to a temperature change in the battery module (as compared to the pressure change in response to temperature change in a battery module that is confirmed to be IP sealed and does not have leakage). In such an example, the slower pressure change is due to a crack on the battery module casing of the battery module that was originally IP sealed. In other words, when there is crack on the battery module casing of a battery module that was manufactured through an IP sealing process, the crack releases pressure from within the battery module, causing pressure to change slower in response to a temperature change.

Referring now to FIG. 12, an example diagram 1200 illustrates an example pressure value curve 1202 and an example temperature value curve 1204 that associated with a battery module that is IP sealed but has cracks/leaks.

In the example shown in FIG. 12, the timeline can be divided based on the temperature values in the example temperature value curve 1204. For example, the timeline may include an exothermic phase 1206 (where the temperature within the battery module increases) and a cool down phase 1208 (where the temperature within the battery module decreases). In particular, after the temperature value reaches a maximum point, the temperature value in the temperature value curve 1204 decreases (as reflected in the temperature value curve portion 1210).

In the example shown in FIG. 12, the pressure values in the example pressure value curve 1202 increases at a slower rate as compared to that of the example shown in FIG. 11. The slower rate indicates that there is a crack on the battery module casing of the battery module. In the example shown in FIG. 12, the example pressure value curve 1202 never reaches the pressure venting threshold 1214 because of the crack on the battery module casing. The pressure values in the example pressure value curve 1202 decreases as shown by the pressure value curve portion 1212.

Referring back to FIG. 10, if, at step/operation 1006, the battery module leakage detection device determines that detected pressure-to-temperature value is not below the baseline pressure-to-temperature value, the example method 1000 proceeds to step/operation 1012 and ends.

If, at step/operation 1006, the battery module leakage detection device determines that detected pressure-to-temperature value is below the baseline pressure-to-temperature value, the example method 1000 proceeds to step/operation 1008. At step/operation 1008, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that generates the leakage warning signal indicating a crack on the battery module casing.

In some embodiments, in response to determining that the detected pressure-to-temperature value is below the baseline pressure-to-temperature value, the controller generates the leakage warning signal indicating a crack on the battery module casing. In some embodiments, the leakage warning signal provides an electronic indication (for example, an electronic message, a system message, and/or the like) that not only indicates a leakage associated with the battery module, but also indicates that the leakage is caused by a crack on the battery module casing of the battery module.

Referring back to FIG. 10, subsequent to and/or in response to step/operation 1008, the example method 1000 may optionally proceed to step/operation 1010. At step/operation 1010, a battery module leakage detection device (such as, but not limited to, the battery module leakage detection device 107 described above in connection with at least FIG. 1 and/or FIG. 2) includes a controller (such as, but not limited to, the controller 204 illustrated and described above in connection with at least FIG. 2) that calculates a crack size estimation value.

In some embodiments, the crack size estimation value indicates an estimated size of the crack on the battery module that causes the leakage. In some embodiments, the controller calculates the crack size estimation value associated with the crack on the battery module casing based on a pressure-to-temperature difference value.

In some embodiments, the controller calculates the pressure-to-temperature difference value based on the baseline pressure-to-temperature value (for example, calculated in accordance with the example method 800 shown in FIG. 8) and the detected pressure-to-temperature value (for example, calculated in accordance with the example method 900 shown in FIG. 9) that are associated with an IP sealed battery module.

In some embodiments, the controller calculates the pressure-to-temperature difference value based on the following equation:

$$C = \Delta R_b - \Delta R_d = \Delta P_b(\Delta T_b) - \Delta P_d(\Delta T_d) = \frac{P_{b2} - P_{b1}}{T_{b2} - T_{b1}} - \frac{P_{d2} - P_{d1}}{T_{d2} - T_{d1}}$$

In the above equation, C is the pressure-to-temperature difference value. $\Delta R_b$ is the baseline pressure-to-temperature value. $\Delta R_d$ is the detected pressure-to-temperature value. $\Delta P_b(\Delta T_b)$ represents the baseline pressure ramp value $\Delta P_b$ as a function of the baseline temperature ramp value $\Delta T_b$. $\Delta P_d(\Delta T_d)$ represents the detected pressure ramp value $\Delta P_d$ as a function of the detected temperature ramp value $\Delta T_d$.

In some embodiments, the crack size estimation value is proportional to the pressure-to-temperature difference value. In other words, the bigger the crack on the battery module, the more pressure being released through the crack on the battery module, and the higher the pressure-to-temperature difference value.

Referring back to FIG. 10, subsequent to step/operation 1010 or step/operation 1008, the example method 1000 proceeds to step/operation 1012 and ends.

While the description above provides an example method of detecting leakage in an IP sealed battery module, it is noted that the scope of the present disclosure is not limited to the description above.

For example, as illustrated above in connection with at least FIG. 11, when the pressure relief valve opens, there is a drop of pressure within the battery module casing that is not due to any leakage. Various embodiments provide example methods that can distinguish the drop of pressure due to opening of the pressure relief valve and the drop of pressure due to leakage.

In some embodiments, an example method of detecting leakage in an IP sealed battery module may record the pressure venting threshold of the pressure relief valve. As described above, the pressure venting threshold is the pressure value that triggers the pressure relief valve to open. In some embodiments, the pressure and temperature sensor provides detected pressure signals to the controller, and the controller compares the detected pressure from these signals with the pressure venting threshold of the pressure relief valve. If the detected pressure is the same as the pressure venting threshold, the controller determines that the drop of pressure (for a time period after the detected pressure reaches the pressure venting threshold) is due to the opening of the pressure relief valve.

As such, in some embodiments, the controller forgoes determining whether there is a leakage of the IP sealed battery module for the time period after the detected pressure reaches the pressure venting threshold. In some embodiments, the time period corresponds to the time duration of opening of the pressure relief valve. In some embodiments, the controller stays idle and waits for the time period to pass. Subsequent to the time period, the controller resumes determining whether there is a leakage of the IP sealed battery module in accordance with various embodiments of the present disclosure.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

**Claims**

1. A battery module leakage detection device comprising:

   a pressure and temperature sensor positioned within a battery module casing of a battery module; and
   a controller in electronic communication with the pressure and temperature sensor, wherein the controller is configured to:

   receive a plurality of detected pressure signals and a plurality of detected temperature signals from the pressure and temperature sensor;
   calculate a detected pressure-to-temperature value based on the plurality of detected pressure signals and the plurality of detected temperature signals;
   calculate a pressure-to-temperature difference value between the detected pressure-to-temperature value and a baseline pressure-to-temperature value associated with the battery module; and
   in response to determining that the pressure-to-temperature difference value is outside a tolerance threshold, generate a leakage warning signal associated with the battery module.

2. The battery module leakage detection device of claim 1, wherein the battery module comprises:

   a plurality of battery cells positioned within the battery module casing; and
   a battery management system positioned within the battery module casing and in electronic communication with the controller.

3. The battery module leakage detection device of claim 1, wherein the plurality of detected pressure signals indicates a plurality of detected pressure values associated with the battery module, wherein the plurality of detected temperature signals indicates a plurality of detected temperature values associated with the battery module.

4. The battery module leakage detection device of claim 3, wherein the battery module is manufactured based on a hermetic sealing process.

5. The battery module leakage detection device of claim 4, wherein the controller is configured to:

   receive a baseline pressure signal indicating a baseline pressure value and a baseline temperature signal indicating a baseline temperature value that are associated with a baseline battery module that is hermetically sealed; and
   calculate the baseline pressure-to-temperature value by dividing the baseline pressure value by the baseline temperature value.

6. The battery module leakage detection device of claim 4, wherein the controller is configured to:
   calculate the detected pressure-to-temperature value based on dividing a detected pressure value of the plurality of detected pressure values by a detected temperature value of the plurality of detected temperature values.

7. The battery module leakage detection device of claim 4, wherein the controller is configured to:
   in response to determining that the detected pressure-to-temperature value is below the baseline pressure-to-temperature value, generate the leakage warning signal indicating a crack on the battery module casing.

8. The battery module leakage detection device of claim 7, wherein the controller is configured to:
calculate a crack size estimation value associated with the crack on the battery module casing based on the pressure-to-temperature difference value.

9. The battery module leakage detection device of claim 7, wherein the controller is configured to:
in response to determining that the detected pressure-to-temperature value is above the baseline pressure-to-temperature value, generate the leakage warning signal indicating a gas release within the battery module casing.

10. The battery module leakage detection device of claim 9, wherein the controller is configured to:
calculate a gas volume estimation value associated with the gas release within the battery module casing based on the pressure-to-temperature difference value.

11. The battery module leakage detection device of claim 3, wherein the battery module is manufactured based on an ingress protection (IP) process.

12. The battery module leakage detection device of claim 11, wherein the controller is configured to:

receive a plurality of baseline pressure signals indicating a plurality of baseline pressure values and a plurality of baseline temperature signals indicating a plurality of baseline temperature values that are associated with a baseline battery module that is IP sealed;
calculate a baseline pressure ramp value between a previous baseline pressure value and a subsequent baseline pressure value from the plurality of baseline pressure values;
calculate a baseline temperature ramp value between a previous baseline temperature value and a subsequent baseline temperature value from the plurality of baseline temperature values; and
calculate the baseline pressure-to-temperature value by dividing the baseline pressure ramp value by the baseline temperature ramp value.

13. The battery module leakage detection device of claim 11, wherein the controller is configured to:

calculate a detected pressure ramp value between a previously detected pressure value and a subsequently detected pressure value from the plurality of detected pressure values;
calculate a detected temperature ramp value between a previously detected temperature value and a subsequently detected temperature value from the plurality of detected temperature values; and
calculate the detected pressure-to-temperature value by dividing the detected pressure ramp value by the detected temperature ramp value.

14. The battery module leakage detection device of claim 11, wherein the controller is configured to:
in response to determining that the detected pressure-to-temperature value is below the baseline pressure-to-temperature value, generate the leakage warning signal indicating a crack on the battery module casing.

15. The battery module leakage detection device of claim 14, wherein the controller is configured to:
calculate a crack size estimation value associated with the crack on the battery module casing based on the pressure-to-temperature difference value.

FIG. 1

FIG. 2

EP 4 325 630 A2

FIG. 3

**400**

START — 402

⬇

RECEIVE A BASELINE TEMPERATURE SIGNAL — 404

⬇

RECEIVE A BASELINE PRESSURE SIGNAL — 406

⬇

CALCULATE THE BASELINE PRESSURE-TO-TEMPERATURE VALUE — 408

⬇

END — 410

FIG. 4

**500**

START — 501

⬇

RECEIVE A DETECTED TEMPERATURE SIGNAL — 503

⬇

RECEIVE A DETECTED PRESSURE SIGNAL — 505

⬇

CALCULATE THE DETECTED PRESSURE-TO-TEMPERATURE VALUE — 507

⬇

END — 509

FIG. 5

FIG. 6

FIG.7

EP 4 325 630 A2

**800**

```
        START ──802
          │
          ▼
RECEIVE A PLURALITY OF BASELINE PRESSURE SIGNALS ──804
AND A PLURALITY OF BASELINE TEMPERATURE SIGNALS
          │
          ▼
CALCULATE A BASELINE PRESSURE RAMP VALUE ──806
          │
          ▼
CALCULATE A BASELINE TEMPERATURE RAMP VALUE ──808
          │
          ▼
CALCULATE THE BASELINE PRESSURE-TO-TEMPERATURE ──810
                    VALUE
          │
          ▼
         END ──812
```

FIG. 8

**900**

```
        START ──901
          │
          ▼
CALCULATE A DETECTED PRESSURE RAMP VALUE ──903
          │
          ▼
CALCULATE A DETECTED TEMPERATURE RAMP VALUE ──905
          │
          ▼
CALCULATE THE DETECTED PRESSURE-TO- ──907
       TEMPERATURE VALUE
          │
          ▼
         END ──909
```

FIG. 9

1000

START — 1002

CALCULATE DETECTED PRESSURE-TO-TEMPERATURE VALUE — 1004

DETECTED PRESSURE-TO-TEMPERATURE VALUE BELOW THE BASELINE PRESSURE-TO-TEMPERATURE VALUE? — 1006

NO

YES

GENERATE THE LEAKAGE WARNING SIGNAL INDICATING A CRACK ON THE BATTERY MODULE CASING — 1008

CALCULATE A CRACK SIZE ESTIMATION VALUE — 1010

END — 1012

FIG. 10

FIG. 11

FIG. 12